# EUROPEAN PATENT APPLICATION

(11) **EP 3 115 957 A1**
(43) Date of publication of application: **11.01.2017**
(21) Application number: 16183285.2
(22) Date of filing: 28.12.2011
(51) Int. Cl.: G06Q 30/02

(54) **SYSTEM AND METHOD FOR IDENTIFYING REVIEWERS WITH INCENTIVES**

(62) Divisional of application: 11878706.8
(71) Applicant: Intel Corporation, Santa Clara, CA 95054 (US)
(72) Inventor: WOUHAYBI, Rita H., Portland, OR Oregon 97229 (US); MO, Stanley, Portland, OR Oregon 97229 (US); KOHLENBERG, Tobias, Portland, OR Oregon 97219 (US); MIAN, Mubashir, A., Morton Grove, IL Illinois 60053 (US)
(74) Representative: Rummler, Felix

(57) **Abstract**

A system and method includes obtaining reviews from an electronic commerce site, generating statistics via a specifically programmed machine regarding the reviews by reviewers, identifying reviewers via the machine having statistics indicative of a compensated reviewer, generating scores via the machine for the reviewers indicative of a probability that each reviewer is a compensated reviewer. The method may further or alternatively include monitoring user interactions via a specifically programmed machine with electronic commerce generated content with respect to reviews of products, and providing a reviewer score via the machine responsive to such user interactions, wherein the score is representative of the probability that a reviewer generating the score is compensated with respect to providing reviews.

## Description

### Background

Many electronic commerce websites facilitate the use of mobile applications to scan pictures of products and obtain immediate information such as pricing, detailed information, reviews and recommendations for similar products. A product may be purchased quite efficiently. Some users even use electronic commerce websites as a source of reviews, while purchasing a product elsewhere.

At least one electronic commerce website provides compensation for writing reviews, either with direct payments or free products. An invite-only network of compensated reviewers was generated by applying principles from social networking related to "tipping points." Reviewers are identified through inspection of several properties and invited to become part of the network of compensated reviewers. Compensated reviewers are typically influential people in their social network on a topic, and may be identified through inspection of several properties. The compensated reviewers are often the people that appear to convince others to buy a product. The principle of a tipping point has been made popular in the field of electronic commerce after Malcolm Gladwell published The Tipping Point: How Little Things Can Make a Big Difference.

As a result of the growth of compensated reviewers, many reviews may no longer be a source of unbiased reviews of products and goods. In addition, it is often impossible for an average consumer to identify a review from a compensated reviewer in a list of reviews, as electronic commerce websites do not usually release that information. Consumers are left in the dark as to which reviews can be trusted.

### Brief Description of the Drawings

FIG. 1 is a block diagram illustrating an architecture for providing information to users about reviewers of products according to an example embodiment.
FIG. 2 is a flowchart illustrating a method of providing users with information regarding electronic commerce product reviewers according to an example embodiment.
FIG. 3 is a block diagram of a display of an electronic commerce site according to an example embodiment.
FIG. 4 is a flowchart illustrating a method of assigning scores to product reviewers on electronic commerce according to an example

### embodiment.

FIG. 5 is a block diagram of a computer system to implement methods according to an example embodiment.

### Detailed Description

In the following description, reference is made to the
accompanying drawings that form a part hereof, and in which is shown by way of illustration specific embodiments which may be practiced. These
embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be
implemented in software or a combination of software and human implemented procedures in one embodiment. The software may consist of computer executable instructions stored on at least one computer readable media such as memory or other type of storage devices. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

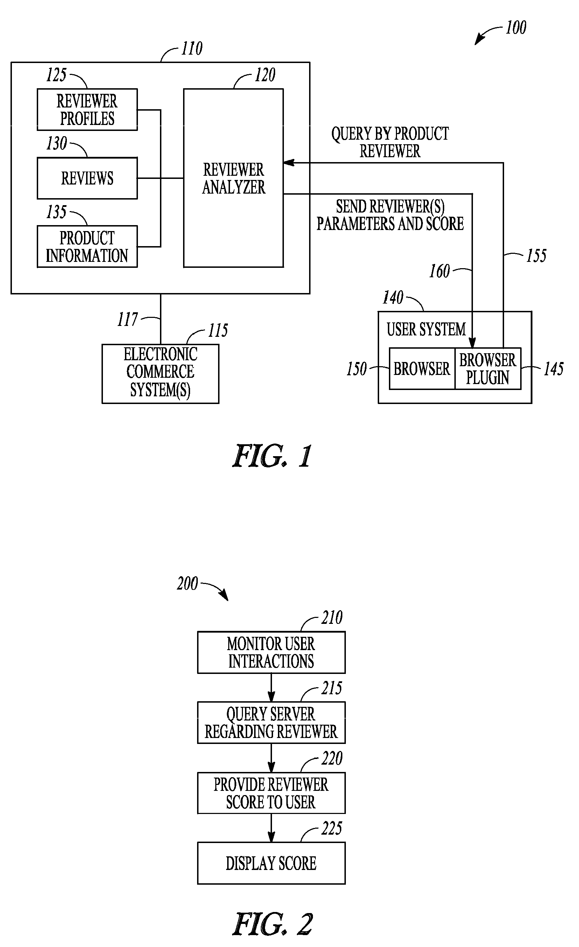

FIG. 1 is a block diagram illustrating an architecture 100 for providing information to users about reviewers of products. A system 110 obtains information about reviewers from one or more electronic commerce (e- commerce) systems 1 15. Properties related to product reviews and reviewers are harvested from electronic commerce websites. In some embodiments, the system 110 crawls through the electronic commerce systems 115 via a network connection 117 to obtain information about the reviewers and the number of reviews for various products by each reviewer. The information may be harvested in a number of different ways, including using a monitor or other device to monitor feeds such as internet RSS (really simple syndication - generally used to publish frequently updated information) feeds as opposed to brute force crawling. The network connections may be any type of wireless or hardwired connections to a network, such as the internet or other private or public type of network.

A reviewer analyzer 120 utilizes the harvested information to create user profiles 125, reviews 130, and product information 135. These created data structures may be stored on system 1 10 or elsewhere where it is accessible to the reviewer analyzer 120. System 1 10 also derives statistical properties about the reviews and reviewers. For example, the average and standard deviation of the number of reviews per reviewer, number of comments per review, and number of helpful votes per review may be derived and stored. If a person is in the upper elite of the statistical measures, meaning that they have a large number of reviews and a higher than normal number of comments and votes on a large percentage of their reviews, then the probability of the reviewer being compensated is larger.

In one embodiment, the harvested properties are used to identify likely compensated reviewers for the electronic commerce websites. A score may also be provided in the reviewer profiles 125. The score may be proportional to a probability that a reviewer belongs to a network of
compensated reviewers for an electronic commerce site. Information identifying how the score was assigned and the factors that contributed to the score may also be provided in the reviewer profiles 125. Where reviewers can be correlated across multiple electronic commerce sites, harvested data from such sites may be combined to generate one or more reviewer scores for each electronic commerce site.

A user system 140 contains functions to allow users to visit electronic commerce systems 115 and view product information and reviews associated with the products the users are viewing. System 140 may contain a web browser 150 that is executing on the system. In one embodiment, a browser plugin 145 is added to the web browser 150 and monitors the user interaction with each electronic commerce system. When a user places a cursor or otherwise selects a reviewer displayed from the electronic commerce system 1 15, the browser plugin 145 queries the reviewer analyzer 120 using a network connection 155, either by product or reviewer in various embodiments. The plugin 145 thus provides a layer on top of electronic commerce (e-commerce) sites. The plugin 145 detects when a user hovers or clicks on a review, and facilitates display of the score of the associated reviewer, reflecting a probability of the reviewer being a compensated reviewer for the particular e-commerce site.

The reviewer analyzer 120 obtains reviewer information and provides an indication to the user via a network connection 160 regarding whether or not the reviewer is a likely to be a compensated reviewer. The indication provided at 160 may include the score, which can be any type of score such as an alphanumeric identifier on a scale, or even a linguistic indicator such as "Not Likely Compensated" or "Likely Compensated." Other indicators might use language familiar with users, such as "Peer Review" or "Incentivized Review."

In some embodiments, the indication contains further
information, or a link to further information regarding the reviewer such as the reasons the score for the reviewer was assigned. Such information may include the number of reviews of related products, higher than normal number of comments, votes on a large percentage of reviews, analysis of reviewer blogs related to the review, and other parameters that may adapt as electronic commerce sites change the way in which they identify and reward compensated reviewers. The information can help a consumer in deciding how seriously they should take a review into consideration in the purchasing decision. In some embodiments, all reviews on a page being viewed by the user may have reviewer scores associated with the reviews displayed.

FIG. 2 is a flowchart illustrating a method 200 of providing users with information regarding electronic commerce product reviewers. In some embodiments, products include products and services, and any type of goods that may be purchased by consumers. Method 200 includes monitoring user interactions with electronic commerce generated content with respect to reviews of products at 210. The user interactions may be monitored via a browser plugin 145 executing on a user device in some embodiment.

At 215, a server is queried based on the user interactions. The query may identify the reviewer by reviewer name or ID, and may also include information identifying the electronic commerce site on which the review appeared, and optionally the product being reviewed. A reviewer score responsive to such user interactions is provided to the user at 220. The score may be representative of the probability that a reviewer generating the score is compensated with respect to providing reviews. At 225, the score may be displayed on a display device. The reviewer may include a link to further information describing parameters that contributed to the score.

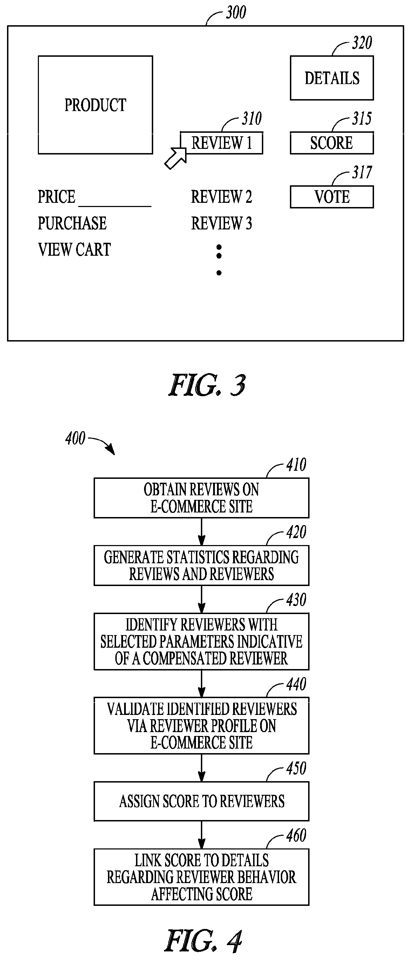

FIG. 3 is a block diagram of a display 300 of an electronic commerce site illustrating a reviewer 310 and associated score 315 provided via the browser plugin 145. In one embodiment, the display provides a voting mechanism 317 to allow a user to vote on the score. In some embodiments, details 320 may be provided. The details may be displayed with the score, or may be linked to the score and displayed next to the score or in an additional window in various embodiments.

FIG. 4 is a flowchart illustrating a method 400 of assigning scores to product reviewers on electronic commerce sites according to an example embodiment. At 410, reviews are obtained from an electronic commerce site. The reviews may be obtained by brute force crawling through the electronic commerce website, or electronic feeds, such as RSS feeds may be used to obtain the reviews. In some embodiments, profiles of reviewers on the electronic commerce website may be obtained in addition to the reviews. Reviews from more than one electronic commerce site may be obtained. While reviewers may be difficult to correlate between such different sites since they may have different user ids, the information may still be informative. The information from different sites may be indicative of whether the reviewer is compensated by only one site, or appears to be compensated by many different sites. Thus, the differences in behavior and harvested parameters of the user on different sites may point to whether or not the user is compensated on each site.

At 420, statistics are generated regarding the reviews and associated reviewers. The statistics to be generated may be based on principles from social networking and public information in order to identify whether users are members of a group of reviewers that are compensated. For example, in one embodiment, average and standard deviations of the number of reviews per reviewer, number of comments per review, and number of helpful votes per review may be generated.

In one embodiment, a natural language processor may be used to scan all available reviews, and to search for re-used relevant phrases in commentary verbiage that occurs in multiple reviews. This information may be used to determine if the reviewer is likely the same as other reviewers on the same or different websites and services. If it is determined that the reviews are from the same reviewer, those reviews may be added to the reviewer and compared to the statistics generated to determine if the reviewer is likely to be a compensated reviewer. If the same commentary is being cut and pasted across locations and sites, it may be indicative of followers to the reviewer, or the same reviewer.

In further embodiments, the score for a reviewer may also be a function of whether the reviewer has a blog and has posted reviews on their blog, or even that their blog belongs to a topic that is related to the review. In one example, a reviewer has a cooking blog and they have reviewed cooking utensils and gadgets. This will contribute to their score and can be extracted by looking at their profile and checking the blog identified in the profile.

At 430, reviewers with selected properties indicative of a compensated reviewer are identified. If a reviewer has a high number of reviews, a higher than normal number of comments, and votes on a large percentage of their reviews compared to other reviewers, then the probability of them being a compensated reviewer is higher. If a reviewer has just one review, the probability of them being compensated is low. If a reviewer has three or more reviews of similar products, a threshold may be exceeded indicating that the probability associated with that parameter is higher. Thresholds for each of the parameters may be established and weighted in some embodiments. The probability score may then simply be a summing of whether or not the thresholds for each parameter are exceeded. If there are three parameters, and a one or zero assigned to each, a total score of zero would result in a very low probability. If all three parameters are exceeded, a score of three would indicate a very high probability.

To validate at 440 whether a selected reviewer is to be identified as a likely compensated reviewer, the reviewer profile information from the electronic commerce site is utilized. Parameters may include reviewer rank, topics and types of products reviewed, whether or not the reviewer has a webpage or blog where products are reviewed (indicative that they are more likely to be compensated), and frequency of reviews (compensated reviewers tend to publish more consistently at close to uniform intervals). Once validated, the score is assigned to each reviewer at 450. Details regarding the score for each reviewer are linked with the score at 460.

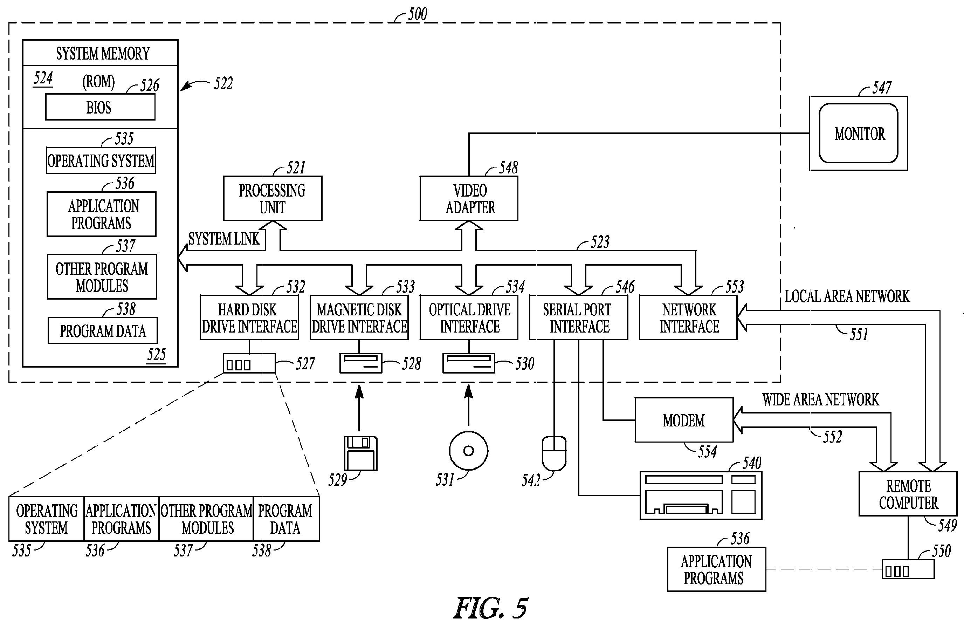

FIG. 5 is a block diagram of a computer system to implement methods according to an example embodiment. In the embodiment shown in FIG. 5, a hardware and operating environment is provided that is applicable to any of the servers and/or remote clients shown in the other Figures, such as system 110 and user system 140. In some embodiments, the user system may be a smart phone, tablet, or other networked device that can provide access and interactive capabilities with an electronic commerce system such as a website. Such devices need not have all the components included in FIG. 5.

As shown in FIG. 5, one embodiment of the hardware and operating environment includes a general purpose computing device in the form of a computer 500 (e.g., a personal computer, workstation, or server), including one or more processing units 521, a system memory 522, and a system link 523 that operatively couples various system components including the system memory 522 to the processing unit 521. There may be only one or there may be more than one processing unit 521, such that the processor of computer 500 comprises a single processing unit, or a plurality of processing units, commonly referred to as a multiprocessor or parallel-processor environment. In various embodiments, computer 500 is a conventional computer, a distributed computer, or any other type of computer.

The system link 523 can be any of several types of bus structures including a memory bus or memory controller, a peripheral bus, and a local bus using any of a variety of bus architectures. The system memory can also be referred to as simply the memory, and, in some embodiments, includes read-only memory (ROM) 524 and random-access memory (RAM) 525. A basic input/output system (BIOS) program 526, containing the basic routines that help to transfer information between elements within the computer 500, such as during start-up, may be stored in ROM 524. The computer 500 further includes a hard disk drive 527 for reading from and writing to a hard disk, not shown, a magnetic disk drive 528 for reading from or writing to a removable magnetic disk 529, and an optical disk drive 530 for reading from or writing to a removable optical disk 531 such as a CD ROM or other optical media.

The hard disk drive 527, magnetic disk drive 528, and optical disk drive 530 couple with a hard disk drive interface 532, a magnetic disk drive interface 533, and an optical disk drive interface 534, respectively. The drives and their associated computer-readable media provide non volatile storage of computer-readable instructions, data structures, program modules and other data for the computer 500. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 529, optical disk 531, ROM 524, or RAM 525, including an operating system 535, one or more application programs 536, other program modules 537, and program data 538. Programming for implementing one or more processes or method described herein may be resident on any one or number of these computer-readable media.

A user may enter commands and information into computer 500 through input devices such as a keyboard 540 and pointing device 542. Other input devices (not shown) can include a microphone, joystick, game pad, satellite dish, scanner, or the like. These other input devices are often connected to the processing unit 521 through a serial port interface 546 that is coupled to the system link 523, but can be connected by other interfaces, such as for example, a parallel port, game port, or a universal serial bus (USB). A monitor 547 or other type of display device can also be connected to the system link 523 via an interface, such as a video adapter 548. The monitor 547 can display a graphical user interface for the user. In addition to the monitor 547, computers typically include other peripheral output devices (not shown), such as speakers and printers.

The computer 500 may operate in a networked environment using logical connections to one or more remote computers or servers, such as remote computer 549. These logical connections are achieved by a communication device coupled to or a part of the computer 500; the invention is not limited to a particular type of communications device. The remote computer 549 can be another computer, a server, a router, a network PC, a client, a peer device or other common network node, and typically includes many or all of the elements described above 1/0 relative to the computer 500, although only a memory storage device 550 has been illustrated. The logical connections depicted in FIG. 5 include a local area network (LAN) 551 and/or a wide area network (WAN) 552. Such networking environments are commonplace in office networks, enterprise-wide computer networks, intranets and the internet, which are all types of networks.

When used in a LAN-networking environment, the computer 500 is connected to the LAN 551 through a network interface or adapter 553, which is one type of communications device. In some embodiments, when used in a WAN-networking environment, the computer 500 typically includes a modem 554 (another type of communications device) or any other type of communications device, e.g., a wireless transceiver, for establishing
communications over the wide-area network 552, such as the internet. The modem 554, which may be internal or external, is connected to the system link 523 via the serial port interface 546. In a networked environment, program modules depicted relative to the computer 500 can be stored in the remote memory storage device 550 of remote computer, or server 549. It is appreciated that the network connections shown are exemplary and other means of, and communications devices for, establishing a communications link between the computers may be used including hybrid fiber-coax connections, T1-T3 lines, DSL's (digital subscriber loops), OC-3 (optical carrier with a transmission rate of 3x51.84Mbit/second) and/or OC-12 (optical carrier with a transmission rate of 12x51.84Mbit/second), TCP/IP (transmission control protocol/internet protocol), microwave, wireless application protocol, and any other electronic media through any suitable switches, routers, outlets and power lines, as the same are known and understood by one of ordinary skill in the art.

### Examples:

1. An example method for identifying compensated reviewers, the method comprising: monitoring user interactions via a specifically programmed machine with electronic commerce generated content with respect to reviews of products; and providing a reviewer score via the machine responsive to such user interactions, wherein the score is representative of the probability that a reviewer generating the score is compensated with respect to providing reviews.
2. The example method of example 1 wherein the user interactions are monitored via a browser plugin executing on a user computer system.
3. The example method of example 1 or 2 and further comprising: querying a server based on the user interactions; and receiving the score from the server, wherein providing a reviewer score comprises displaying the reviewer score on a display device.
4. The example method of example 3 wherein displaying the reviewer score on the display device includes providing a link to further information describing parameters that contributed to the score.
5. The example method of example 4 wherein the parameters include number of reviews by the reviewer for similar products or products in the same category.
6. The example method of example 4 wherein the parameters include votes on their reviews.
7. The example method of example 1, 2, 3, 4, 5, or 6 wherein the reviewer score is a function of reviewer blogs for related products.
8. At least one computer readable storage device having instructions stored thereon for causing a computer to implement one of the methods of examples 1-7.
9. An example method for identifying compensated reviewers, the method comprising: obtaining reviews from an electronic commerce site; generating statistics via a specifically programmed machine regarding the reviews by reviewers; identifying reviewers via the machine having statistics indicative of a compensated reviewer; and generating scores via the machine for the reviewers indicative of a probability that each reviewer is a compensated reviewer.
10. The example method of example 9 and further comprising: receiving a query from a user system via a communication network regarding a reviewer on an electronic commerce site; and providing the score to the user system for display on a display device.
11. The example method of example 10 wherein providing the reviewer score includes providing a link to further information describing parameters that contributed to the score.
12. The example method of example 11 wherein the parameters include number of reviews by the reviewer for similar products and votes on their reviews.
13. The example method of example 9 and further comprising: obtaining reviewer profiles from the electronic commerce sites; and validating identified compensated reviewers using information from the obtained profiles.
14. At least one example computer readable storage device having instructions stored thereon for causing a computer to implement a method for identifying compensated reviewers, the method comprising: obtaining reviews from an electronic commerce site; generating statistics via a specifically programmed machine regarding the reviews by reviewers; identifying reviewers via the machine having statistics indicative of a compensated reviewer; and generating scores via the machine for the reviewers indicative of a probability that each reviewer is a compensated reviewer.
15. The example computer readable storage device of example 14 and further comprising: receiving a query from a user system via a communication network regarding a reviewer on an electronic commerce site; and providing the score to the user system for display on a display device.
16. The example computer readable storage device of example 14 wherein providing the reviewer score includes providing a link to further information describing parameters that contributed to the score.
17. The example computer readable storage device of example 16 wherein the parameters include number of reviews by the reviewer for similar products and votes on their reviews.
18. The example computer readable storage device of example 15 and further comprising: obtaining reviewer profiles from the electronic commerce sites; and validating identified compensated reviewers using information from the obtained profiles.
19. An example system for identifying compensated reviewers, the system comprising: a monitor to monitor user interactions with electronic commerce generated content with respect to reviews of products; and a display to provide a reviewer score responsive to such user interactions, wherein the score is representative of the probability that a reviewer generating the score is compensated with respect to providing reviews.
20. The example system of example 19 and further comprising: a query interface to query a server based on the user interactions; and a receiver to receive the score from the server and provide the score to the display.
21. The example system of example 18 or 19 wherein the display provides a link to further information describing parameters that contributed to the score, and wherein the parameters include number of reviews by the reviewer for similar products or products in the same category.
22. The example system of example 19 wherein the monitor comprises a browser plugin.
23. An example system for identifying compensated reviewers, the system comprising: a monitor to obtain reviews from an electronic commerce site; an analyzer to generate statistics via a specifically programmed machine regarding the reviews by reviewers, the analyzer to identify reviewers having statistics indicative of a compensated reviewer, and, the analyzer tO generate scores via the machine for the reviewers indicative of a probability that each reviewer is a compensated reviewer.
24. The example system of example 23 and further comprising a server to receive a query from a user system via a communication network regarding a reviewer on an electronic commerce site and provide the score to the user system for display on a display device.
25. The example system of example 23 wherein the server provides a link to further information describing parameters that contributed to the score.
26. The example system of example 25 wherein the parameters include number of reviews by the reviewer for similar products and votes on their reviews.
27. The example system of example 23 wherein the analyzer obtains reviewer profiles from the electronic commerce sites and validates identified compensated reviewers using information from the obtained profiles.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

### Additional Embodiments

In an embodiment there is provided a method for identifying compensated reviewers, the method comprising: monitoring user interactions via a specifically programmed machine with electronic commerce generated content with respect to reviews of products; and providing a reviewer score via the machine responsive to such user interactions, wherein the score is representative of the probability that a reviewer generating the score is compensated with respect to providing reviews.

The user interactions may be monitored via a browser plugin executing on a user computer system.

The method may further comprise: querying a server based on the user interactions;
and receiving the score from the server, wherein providing a reviewer score comprises displaying the reviewer score on a display device.

Displaying the reviewer score on the display device may include providing a link to further information describing parameters that contributed to the score.

The parameters may include number of reviews by the reviewer for similar products or products in the same category.

The parameters may include votes on their reviews.

The reviewer score may be a function of reviewer blogs for related products.

In an embodiment there is provided at least one computer readable storage device having instructions stored thereon for causing a computer to implement one of the above methods.

In an embodiment there is provided a method for identifying compensated reviewers,
the method comprising: obtaining reviews from an electronic commerce site; generating statistics via a specifically programmed machine regarding the reviews by reviewers;
identifying reviewers via the machine having statistics indicative of a compensated reviewer;
and generating scores via the machine for the reviewers indicative of a probability that each reviewer is a compensated reviewer.

The method may further comprise: receiving a query from a user system via a communication network regarding a reviewer on an electronic commerce site; and providing the score to the user system for display on a display device.

Providing the reviewer score may include providing a link to further information describing parameters that contributed to the score.

The parameters may include number of reviews by the reviewer for similar products and votes on their reviews.

The method may further comprise: obtaining reviewer profiles from the electronic commerce sites; and validating identified compensated reviewers using information from the obtained profiles.

In an embodiment there is provided at least one computer readable storage device having instructions stored thereon for causing a computer to implement a method for identifying compensated reviewers, the method comprising: obtaining reviews from an electronic commerce site; generating statistics via a specifically programmed machine regarding the reviews by reviewers; identifying reviewers via the machine having statistics indicative of a compensated reviewer; and generating scores via the machine for the reviewers indicative of a probability that each reviewer is a compensated reviewer.

The computer readable storage device may further comprise: receiving a query from a user system via a communication network regarding a reviewer on an electronic commerce site; and providing the score to the user system for display on a display device.

Providing the reviewer score may include providing a link to further information describing parameters that contributed to the score.

The parameters may include number of reviews by the reviewer for similar products and votes on their reviews.

The computer readable storage device may further comprise: obtaining reviewer profiles from the electronic commerce sites; and validating identified compensated reviewers using information from the obtained profiles.

In an embodiment there is provided a system for identifying compensated reviewers,
the system comprising: a monitor to monitor user interactions with electronic commerce generated content with respect to reviews of products; and a display to provide a reviewer score responsive to such user interactions, wherein the score is representative of the probability that a reviewer generating the score is compensated with respect to providing reviews.

The system may further comprise: a query interface to query a server based on the user interactions; and a receiver to receive the score from the server and provide the score to the display.

The display may provide a link to further information describing parameters that contributed to the score, and wherein the parameters include number of reviews by the reviewer for similar products or products in the same category.

The monitor may comprise a browser palugin.

In an embodiment there is provided a system for identifying compensated reviewers, the system comprising: a monitor to obtain reviews from an electronic commerce site; an analyzer to generate statistics via a specifically programmed machine regarding the reviews by reviewers, the analyzer to identify reviewers having statistics indicative of a compensated reviewer, and, the analyzer to generate scores via the machine for the reviewers indicative of a probability that each reviewer is a compensated reviewer.

The system may further comprise a server to receive a query from a user system via a communication network regarding a reviewer on an electronic commerce site and provide the score to the user system for display on a display device.

The server may provide a link to further information describing parameters that contributed to the score.

The parameters may include number of reviews by the reviewer for similar products and votes on their reviews.

The analyzer may obtain reviewer profiles from the electronic commerce sites and validates identified compensated reviewers using information from the obtained profiles.

## Claims

1. A method for indicating unreliable reviews on a website, the method comprising;
accumulating a set of data corresponding to a review contributed to the website; calculating a frequency with which an author of the review contributed reviews to the website from the accumulated set of data;
determining a deviation between a set of review properties and a model, the set of review properties comprising the frequency with which the author of the review contributed reviews to the website; and
storing with the review an indication that the review is unreliable based on the deviation, the indication used by the website to modify a display of a webpage including the review.

2. The method of claim 1, wherein the review contributed to the website corresponds to a single product, a single service, or a single business.

3. The method of claim 1, further comprising:
searching other reviews posted on the website using text of the review; and
determining a number of the other reviews containing the text of the review, the set of review properties further comprising the number of other reviews containing text of the review.

4. The method of claim 3, further comprising determining a similarity between a grammatical construction of the text of the review and a grammatical construction of the other reviews posted on the website, the set of review properties further comprising an indication of the similarity.

5. The method of claim 1, the set of review properties further comprising a reviewer rank of an author of the review.

6. The method of claim 1, the set of review properties further comprising a number of votes for the review received from users of the website.

7. The method of claim 1, wherein the model comprises a threshold corresponding to the set of review properties.

8. The method of claim 1, wherein the model comprises a set of thresholds, each threshold of the set of thresholds corresponding to a respective review property of the set of review properties.

9. The method of claim 1, wherein the model comprises a standard distribution of a set of review properties corresponding to reviews contributed to the website by other reviewers.

10. The method of claim 9, wherein the standard distribution includes a standard distribution of the frequency with which the other reviewers contributed reviews to the website, and wherein the deviation is determined based on a calculation that the frequency with which the author of the review contributed reviews to the website is outside the standard distribution of the frequency with which the other reviewers contributed reviews to the website.

11. The method of claim 1, the set of review properties further comprising a number of reviews contributed to the website by the author of the review.

12. At least one machine readable medium including instructions that, when executed by a machine, cause the machine to perform any method of claims 1-11.

13. A system comprising means to perform any method of claims 1-11.
